# EUROPÄISCHE PATENTSCHRIFT

(11) **EP 3 814 049 B1**
(45) Veröffentlichungstag und Bekanntmachung des Hinweises auf die Patenterteilung: **06.04.2022**
(21) Anmeldenummer: 18745813.8
(22) Anmeldetag: 27.06.2018
(51) Int. Cl.: B24B 53/053, B24B 53/07, B24B 53/04, B24B 41/06, B24B 41/04, B23B 31/40, B24B 53/075, B23B 31/30

(54) **ABRICHTDORN FÜR RUNDWERKZEUGE**
TRUING DEVICE FOR CIRCULAR TOOLS
DISPOSITIF DE DRESSAGE DESTINÉ À DES OUTILS RONDS

(43) Veröffentlichungstag der Anmeldung: 05.05.2021
(73) Patentinhaber: Könnemann, Ronny Willian, 63814 Mainaschaff (DE)
(72) Erfinder: Könnemann, Ronny Willian, 63814 Mainaschaff (DE)
(74) Vertreter: Pöhner, Wilfried Anton
(86) Internationale Anmeldenummer: PCT/DE2018/100592
(87) Internationale Veröffentlichungsnummer: WO 2020/001670

(56) Entgegenhaltungen:
- CN-U- 204 053 797
- CN-Y- 201 366 656
- DE-A1- 3 302 478
- DE-A1-102009 023 612

## Beschreibung

Die vorliegende Erfindung betrifft 2. ein Abrichtdorn mit den Merkmalen des Oberbegriffs des Anspruchs 1 und eine diesen einsetzende Abrichtvorrichtung.

Bei der Materialbearbeitung werden Rundwerkzeuge eingesetzt, die auf der Welle einer Werkzeugmaschine aufgespannt und in schnelle Rotation versetzt in Kontakt mit einem zu bearbeitenden Werkstück gebracht werden. Um die äußere Form oder die Oberfläche eines Werkstücks zu bearbeiten werden hierbei insbesondere gleichförmige oder profilierte Schleifscheiben eingesetzt. Trotz Verwendung möglichst abriebfester und widerstandsfähiger Schleifscheiben ist besonders bei Hochpräzisionsanwendungen zum Erhalt der nötigen Genauigkeit und Präzision des Schliffs ein häufiges Nachbessern des Schleifwerkzeugs, ein sogenanntes Abrichten nötig.

Hierzu wird die Schleifscheibe aus der Werkzeugmaschine entfernt und in eine Abrichtmaschine oder -vorrichtung eingesetzt. Diese bestehen wie im Stand der Technik bekannt aus einem Gehäuse, einem Abrichtwerkzeug, dessen Profil ein negativ des gewünschten Profils der Schleifscheibe darstellt, und einem Abrichthäuse, einem Abrichtwerkzeug, dessen Profil ein negativ des gewünschten Profils der Schleifscheibe darstellt, und einem Abrichtdorn, der wiederum der Aufnahme der abzurichtenden Schleifscheibe dient. Das Abrichtwerkzeug und die abzurichtende Schleifscheibe werden dann in auf eine hohe Drehzahl beschleunigt und an den Schleifflächen in Kontakt gebracht, so dass die Schleifscheibe durch das härtere Abrichtwerkzeug selbst geschliffen und sein gewünschtes Profil wiederhergestellt wird.

Der Abrichtdorn hat zur Aufnahme des abzurichtenden Werkzeugs einen Abschnitt zum Anschluss eines Antriebsmotors mittels einer Kupplung oder eines Riemens und ein dazwischenliegendes erstes bzw. Hauptlager aufweist, wobei der Abrichtdorn zumindest am ersten Lagers an dem Gehäuse fixiert ist. Darüber hinaus kann der Abrichtdorn auch vom ersten Lager aus gesehen jenseits der Schleifscheibenaufnahme ein zweites Lager aufweisen, mit dem er ebenfalls am Gehäuse festgelegt ist. Indem axiale und radiale Vibrationen gedämpft werden, verbessert diese beidseitige Fixierung des Abrichtdorns Rund- und Planlauf der Schleifscheibe besonders bei hoher Drehzahl und hoher mechanischer Belastung der Schleifscheibe beim Abrichten enorm.

Das Abrichtwerkzeug hat die anspruchsvolle Aufgabe, das Profil eines aus einem harten Material bestehendes Rundwerkzeugs, insbesondere einer Schleifscheibe, mikrometergenau wiederherzustellen, so dass dieses Rundwerkzeug weiter verwendet werden kann. Um diesen Genauigkeitsanforderungen zu genügen, ist es nötig, zumindest für die Oberfläche das Abrichtwerkzeug ein noch härteres Material als das des Rundwerkzeugs zu verwenden. Wenn über ein haltbares und präzises Abrichtwerkzeug eine hohe Abrichtgenauigkeit erreicht wird, setzt sich diese bis ins Werkstück fort.

Um den Anforderungen von einer Profilgenauigkeit im Mikrometerbereich zu genügen, ist es jedoch daneben auch zwingend erforderlich, dass die Positionierung der Schleifscheibe auf dem Abrichtdorn entsprechend genau erfolgt und sich unter Einfluss der beim Abrichten naturgemäß auf die Schleifscheibe wirkenden hohen Kräften auch nicht ändert. Dies bedingt ein absolut festen und sowohl in radialer wie axialer Richtung vollkommen spielfreien Sitz der Schleifscheibe. Dies kann durch mechanische Spannvorrichtungen wie sie von Werkzeugmaschinen bekannt sind nicht erreicht werden.

Die im Stand der Technik praktizierte Lösung sieht dagegen vor, das die Schleifscheiben durch thermische Behandlung auf den Abrichtdorn "aufgeschrumpft" werden, d.h. die Scheibe wird mit einer relativ zum Dorn höheren Temperatur auf diesen aufgesetzt bzw. -geschoben. Durch die unterschiedliche temperaturbedingte Größenänderung der beiden Teile beim nachfolgenden Temperaturangleich wird der nötige feste Sitz erreicht.

Das Problem hierbei ist der Zeitaufwand und die Komplexität dieses Vorgangs sowohl beim Aufbringen der Schleifscheibe vor als auch insbesondere beim Abziehen nach dem Abrichtvorgang. Alleine letzteres dauert üblicherweise mehrere Stunden.

Dazu kommt, dass durch den intensiven Kontakt der beiden Teile beim Abziehen kein so hoher Temperaturunterschied erreicht werden kann wie beim Aufsetzen und darum auch kein für ein mechanisch einfaches Abziehen ausreichender Größenunterschied. Dies bedeutet dass beim Abziehen der Schleifscheibe vom Abrichtdorn wesentlich größere Kräfte ausgeübt werden müssen als beim Aufstecken. Es besteht hierbei immer die Gefahr, dass ein Teil oder zunichtemacht, sondern die Beschaffung einer neuen Schleifscheibe, eines neuen Abrichtdorns oder beidem erfordert.

Es wäre also wünschenswert, den erforderlichen festen Sitz des Werkzeugs auf dem Abrichtdorn auf eine Weise zu erreichen die ein schnelles und risikoloses Aufsetzen wie Abziehen ermöglicht.

Aus dem Bereich der Werkzeugmaschinen sind Spannvorrichtungen bekannt, die mit hydraulischen Komponenten arbeiten. So beschreibt die DE 2 333 762 B2 eine Spannvorrichtung mit einer die Spindel bzw. Welle konzentrisch umschließender Druckkammer mit einer elastisch verformbaren Außenwand, deren Außenfläche die Spannfläche bildet. Der Nachteil hierbei ist, dass dies Spannvorrichtung in das Werkzeug selbst integriert ist, also eine besondere und aufwendige Gestaltung eines jeden einzelnen Werkzeugs erfordert.

Im Gegensatz hierzu schlägt die DE 88 13 580 U1 eine Spannvorrichtung vor, welche ein hydraulisch aufweitbares Spannteil in Form einer Spannbuchse mit innenliegender Hydraulikmediumkammer aufweist. Diese Kammer ist über eine mit einer Spannschraube verschlossenen Bohrung mit Hydraulikmedium baufschlagbar, wobei der Druck mittels der Spannschraube einstellbar ist. Ein Axialspannglied, welches mit dem aufzuspannenden Werkzeug in axialer Richtung formschlüssig verbunden ist stellt die axiale Fixierung und Positionierung des Werkzeugs sicher. Zwar ist die Spannvorrichtung hier in die Spindel integriert, jedoch verbleibt als Nachteil, dass nur eine Positionierung in einem Endbereich der Spindel möglich und darum eine Verwendung mit beidseitig fixierten Spindeln oder Abrichtdornen nicht möglich ist.

Die Offenlegungsschrift DE 33 02 478 A1 schlägt eine Vorrichtung zum Abrichten einer Schleifscheibe mit einer Abrichtrolle vor, wobei die Abrichtrolle auf einem im Umfangsbereich dieser Schleifscheibe angeordneten Spanndorn aufgespannt ist, und der Spanndorn mit einem Lager für die Abrichtrolle ausgestattet und dieses Lager zusammen mit einem eine Sitzfläche für die Abrichtrolle auf dem Spanndorn bildenden Ringmantel radial zum Spanndorn verformbar ist.

### GEAENDERTES BLATT

Vorliegende Erfindung stellt sich vor diesem Hintergrund die Aufgabe, eine Abrichtmaschine zur Aufnahme von Werkzeugen, insbesondere Schleifscheibe, mit einem Abrichtdorn zu finden, der einfach konstruiert ist und dennoch robuste und schnell lösbare Befestigung der Werkzeuge auch dann ermöglicht, auch wenn er beiderseitig des Werkzeugs gelagert ist.

Diese Aufgabe wird erfindungsgemäß gelöst durch einen Abrichtdorn gemäß Anspruch 1 und eine diesen umfassende Abrichtvorrichtung gemäß Anspruch 15.

Ein Charakteristikum vorliegender Erfindung ist, dass der Spannabschnitt des Abrichtdorns beidseitig, also sowohl mit der dem ersten Lager zu- als auch der abgewandten Seite im Schaft gehalten ist. Wie dies konkret realisiert wird, ist im Rahmen vorliegender Erfindung soweit nicht von Belang, als eine im Wesentlichen gleich belastbare beidseitige Befestigung sichergestellt ist. Hierdurch ist vorteilhaft erreicht, dass die in Folge einer Druckerhöhung des Hydraulikmediums hervorgerufene elastische Deformation des Spannabschnitts bzw. die auf die Innenfläche einer Durchgangsöffnung eines Rundwerkzeugs ausgeübte Einspannkraft im axialen Verlauf deutlich gleichförmiger ist, als bei den bekannten Spannvorrichtungen, welche eine einseitig gehaltene, nicht axialsymmetrische Spannbuchse verwenden.

Dieser Vorteil wird noch verstärkt, wenn der Spannabschnitt so ausgeführt ist, dass sein Querschnitt in seinem axialen Verlauf unverändert bleibt (kontinuierliche Translationssymmetrie) oder sich periodisch wiederholt (diskrete Translationssymmetrie), denn dies bedingt eine gleichmäßige elastische Auswölbung/Verformung des Spannabschnitts bzw. eine gleichmäßige Übertragung der Spannkraft vom Spannabschnitt auf die anliegende Spannfläche des Rundwerkzeugs (also der Innenfläche der vom Abrichtdorn durchgriffenen Öffnung des Werkzeugs).

Besonders vorteilhaft an der Lösung vorliegender Erfindung, einen beidseitig gehaltenen Spannabschnitt vorzusehen, ist, dass sie im Gegensatz zu den aus dem Stand der Technik bekannten Spannvorrichtungen auch mit einer beidseitigen Lagerung des Abrichtdorns kompatibel ist. Diese ist gegenüber einer einseitigen Lagerung bevorzugt, weil hier in hohem Maße unerwünschte Schwingungen gedämpft werden und außerdem sowohl durch die Tatsache der beidseitigen Lagerung als sich als auch zusätzlich durch eine geeignet Wahl der Vorspannung und Anlaufwinkel der verwendeten Lager die Eigenfrequenzen derart verstimmt werden können, dass die relevanten Resonanzen nicht bei den im praktischen Betrieb vorkommenden Frequenzen liegen.

Die erfindungsgemäße, beidseitige Verbindung mit dem Schaft könnte der Spannabschnitt auf einer oder auf beiden Seiten mit dem Schaft integral ausgeführt sein. Dies kann entweder dadurch erreicht werden, dass aus einem zylindrischen, üblicherweise metallenen Rohling nur so viel Material entfernt wird, wie zur Ausformung der Hydraulikmediumkammer nötig. Der Spannabschnitt verbleibt dann als integraler Bestandteil zurück. Da hierbei jedoch eine Zugänglichkeit der Kammer für eine zerspanende Bearbeitung vorausgesetzt ist, kommt dies nur bei einseitiger integraler Verbindung zwischen Spannabschnitt und Schaft in Frage. Soll eine beidseitiger integrale Verbindung erreicht werden, kommt derzeit nur ein Gussverfahren in Betracht. Hierbei sind Hydraulickammer und alle weiteren Hohlräume des Schaftes bzw. Abrichtdorns (ohne Lage) durch ein hinreichend temperaturstabiles Positiv, die Außenmaße des Schaftes/Dorns durch ein entsprechendes Negativ vorgegeben. Um das die Hydraulikkammer und die weiteren Hohlräume ausfüllenden Positiv(e) nach erkalten der Gussmasse zu entfernen, müssten diese fließfähig gemacht werden. Hierfür eignen sich beispielsweise chemische Verfahren wie Ätzen oder mechanische Verfahren wie Vibrationen oder Ultraschallwellen.

Eine interessante Alternative besteht auch darin, das Positiv der Hydraulikmediumkammer aus der später verwendeten Hydraulikflüssigkeit zu formen, welche vor dem Gußvorgang soweit nötig tiefgekühlt wird, z.B. bis auf 80 Kelvin oder auch weniger. Wird die Gußmasse möglichst schnell mit einer möglichst niedrigen Temperatur eingefüllt, wird ein vorschnelles Verflüssigen oder Verdampfen des Mediums und damit einer unvorteilhafte Veränderung der Kammerform vermieden oder vermindert.

Weiterhin könnte auch mithilfe additiver Herstellung (3D-Printing) leicht ein Schaft mit beidseitig integralem Spannabschnitt und darunterliegender Kammer gemäß vorliegender Erfindung hergestellt werden. Das Problem hierbei ist, das 3D-Druck eines mechanisch hochfesten Materials, wie es der Schaft eines Abrichtdorns aufgrund der auftretenden Spann- und Rotationskräfte notwendig sein muss, derzeit noch schwierig ist.

Eine beidseitige integrale Verbindung würde auch erreicht, wenn die Hydraulikmediumkammer, nachdem sie mit einer geeigneten Methode in einen Rohling eingebracht wurde, durch ein flächiges Materialstück vollflächig und druckdicht verschlossen wird. Ist die Hydraulikkammer beispielsweise von einem in ihrer axialen Erstreckung gleichbleibenden kreisringförmigem Querschnitt, kann ein ausgangs rechteckiges Materialstück verwendet werden, welches die Kammer nach oben verschließend auf den Rohling aufgewickelt wird, so dass das im Endzustand einen Hohlzylinder bildet. Eine feste, dauerhafte und druckdichte Verbindung kann durch Verkleben, oder bei geeigneter Materialwahl, auch durch Verschweißen, z.B. thermisches oder auch elektromagnetisches Pulsschweißen erfolgen.

Alternativ kann die Verbindung des Spannabschnitts mit dem Schaft auf einer oder auf beiden Seiten auch eine nicht-integrale sein, wobei im letzteren Fall der Spannabschnitt eine Spannbuchse bildet. Um hierbei die nötige Druckdichtheit zu gewährleisten wird empfohlen, das jeweilige Ende des Spannabschnitts in der Art eines vollumfänglichen nach innen weisenden Flansches auszubilden, so dass es sich unter Einwirkung des unter Druckstehenden Hydraulikmediums in der Kammer mit einer Stirnseite flächig an eine Schulter des Schaftes anschmiegt. Um Undichtigkeiten zu vermeiden, kann eine ringförmige Dichtung aus einem geeigneten elastischen Material zwischen Spannabschnittstirnseite und Schaftschulter eingefügt werden. Alternativ oder zusätzlich kann der Innenrand der nach innen weisenden Verbiegung wiederum nach außen gebogen sein, so dass im Längsschnitt eine Kröpfung und in drei Dimensionen ein Hohlzylinder mit Stufe vorliegt. Wenn der Spannabschnitt mit dem Schaft verbunden ist, greift der vergleichsweise kurze hohlzylindrische Teil mit dem geringeren Durchmesser in eine umlaufende Kerbe der Schaftschulter ein.

Ist der Spannabschnitt beidseitig, also an seinem oberen wie unteren Ende wie beschrieben geformt, wäre sein Einsetzen im Falle eines einteiligen Schafts selbst dann schwierig bis unmöglich. Darum wird in diesem Fall vorgeschlagen, den Schaft zweiteilig auszugestalten, wobei die Unterteilung im Bereich der Kammer erfolgt. Hierdurch kann erst der Spannabschnitt in einen der Teile eingesetzt und dann der zweite Schaftteil angefügt werden.

Das Abziehen eines Rundwerkzeugs, insbesondere einer Schleifscheibe, erfolgt gemäß dem Verfahren (das nicht unter den Schutzbereich der vorliegenden Erfindung fällt) in zwei bis vier Schritten. Zunächst ist der Abrichtdorn gegebenenfalls, d.h. je nach Gestaltung des Gehäuses und des Dorns, an zumindest einem Ende aus seiner Fixierung im Gehäuse der erfindungsgemäßen Abrichtmaschine zu lösen um Zugang zum Rundwerkzeug zu erhalten. Eine noch leichtere Zugänglichkeit kann erreicht werden, wenn alle, also insbesondere eine beiderseitige Fixierung des Dorns gelöst und der Dorn vollständig dem Gehäuse entnommen wird. Hierzu ist das Gehäuse beispielsweise aus trenn- insbesondere aufklappbaren Hälften aufgebaut. Im zweiten Schritt wird eine gegebenenfalls vorhandene vom Vorspannelement unabhängige axiale Fixierung gelöst. Im dritten Schritt wird sodann mit Hilfe des Vorspannelements der Druck des Hydraulikmediums soweit reduziert, dass die auf das Rundwerkzeug ausgeübte Klemmkraft hinreichend erniedrigt, insbesondere im Wesentlichen annulliert wird. Sodann wird das Rundwerkzeug vom Schaft und damit vom Abrichtdorn abgezogen und entfernt. Der Abrichtdorn ist nun bereit zur Aufnahme eines weiteren abzurichtenden Rundwerkzeugs.

Das Aufsetzen erfolgt ähnlich nur mit unter umgekehrter Verwendung des Vorspannelements in vier bis sieben Schritten. Geht man wieder von einem in der erfindungsgemäßen Abrichtmaschine eingesetzten Dorn aus, so ist zunächst wieder dessen Fixierung(en) am Gehäuse zu lösen und der Dorn gegebenenfalls zu entnehmen. Eine von dem Vorspannelement unabhängige axiale Fixierung ist sodann zu öffnen. Anschließend wird, falls nötig mittels des Vorspannelements, etwa indem es in eine Entspann-Stellung gebracht wird, der Druck des Hydraulikmediums und damit der Durchmesser des Spannabschnitts soweit reduziert, dass er zumindest nicht größer oder geringfügig kleiner ist als die lichte Weite einer durchgehenden Öffnung des Rundwerkzeugs. Letzteres wird im nächsten Schritt auf den Abrichtdorn aufgeschoben. Anschließend wird der Hydraulikmediumdruck mit Hilfe des Vorspannelements soweit erhöht, dass durch die Ausdehnung des Spannabschnitts eine radiale Einspannkraft gewünschter Größe auf das Rundwerkzeug ausgeübt wird. Ein gegebenenfalls vorhandenes axiales Fixiermittel wird wieder aufgesetzt und abschließend der Abrichtdorn samt aufgesetztem, eingespanntem Rundwerkzeug wieder in das Gehäuse eingesetzt bzw. Im Gehäuse fixiert, wobei auch die Antriebsseite des Dorns mit dem Antrieb in Wirkverbindung gebracht, beispielsweise an die Welle eines Motors angekuppelt oder von einem Antriebsriemen umwunden wird.

Aufsetzen wie Abziehen dauern bei einem erfindungsgemäßen Abrichtdorn nur wenige Sekunden bis zehn Sekunden was mit den im Stand der Technik angewandten thermischen Verfahren kontrastiert, bei denen vor allem das Abziehen eine bis mehrere Stunden in Anspruch nimmt. Trotzdem wird eine Präzision und Genauigkeit der Positionierung im Mikro- bis Sub-Mikrometerbereich erreicht.

Im Folgenden werden vorteilhafte Weiterbildungen vorliegender Erfindung vorgestellt, die einzeln oder, sofern sie sich nicht offensichtlich gegenseitig ausschließen, in Kombination realisierbar sind.

Um die Genauigkeitsanforderungen im Mikrometerbereich beim Abrichten des auf dem Abrichtdorn der erfindungsgemäßen Abrichtvorrichtung aufgesetzten Rundwerkzeugs zu erfüllen, wird vorgeschlagen, das Abrichtwerkzeug der Abrichtvorrichtung als eine Diamantrolle auszuführen, also als eine Formrolle die oberflächlich mit Diamanten besetzt oder beschichtet ist. Hierbei gilt, dass je höher die Präzision dieser Diamantrolle ist, umso höher ist auch die Präzision der Schleifscheibe, die ihrerseits wiederum an das Werkstück weitergegeben wird. Darüber hinaus kann der Abrichtvorgang mit Diamantrollen schneller durchgeführt werden, als mit Abrichtwerkzeugen aus anderen Materialien, wobei sie trotzdem eine hohe Lebensdauer haben und ein hoher Grad an Wiederholbarkeit wird garantiert ist.

In einer von vorliegender Erfindung vorgeschlagenen Ausführungsform ist der Spannabschnitt als vergleichsweise dünner, Hohlzylinder ausgeführt, der mit dem Schaft beidseitig integral verbunden ist. Diese Verbindung kann dadurch erreicht werden, dass Hydraulikmediumkammer und damit Spannabschnitt bei der Herstellung des Dorns aus einem Stück geformt werden. Alternativ können sie auch zunächst getrennt voneinander erstellt und dann mittels geeigneter Methoden, etwa verkleben oder verscheißen verbunden werden. Die radiale Dicke oder Stärke des Spannabschnitts ist hierbei ein Kompromiss aus zwei gegenläufigen Anforderungen: zum einen wird durch eine geringere Stärke das elastische Modul des Abschnitts verringert und damit seine Verformbarkeit durch Druckerhöhung verbessert, andererseits aber auch seine Stabilität und Robustheit gegenüber punktförmige Kräften bei niedrigem Hydraulikdruck verringert. Letzteres kann insbesondere zu einer unerwünschten Empfindlichkeit gegenüber unvorsichtiger Behandlung beim Aufsetzen oder Abziehen des abzurichtenden bzw. abgerichteten Rundwerkzeugs führen. Eine zu große Stärke erhöht jedoch den für eine bestimmte Klemmwirkung nötigen Hydraulikdruck unvorteilhaft. Bei einem Abrichtdorn aus hochgestemmt Stahl haben sich Stärken von 0,2 - 2 mm, bevorzugt 0,4-1 mm als ein sinnvoll erwiesen.

Es kann zur weiteren Verbesserung der Robustheit bei möglichst hoher Elastizität die Stärke des Spannabschnitts auch eine umfängliche und/oder axiale Variation aufweisen. Der Boden oder die Decke der Hydraulikkammer oder beide können Stützstrukturen aufweisen, die fast bis zur jeweils gegenüberliegenden Seite reichen und so einer allzu großen Deformation des Spannabschnitts unter der Einwirkung äußerer Kräfte verhindern. Insbesondere wird ein umfänglich und/oder axial wellenförmiger Verlauf, wobei die Wellenamplitude nahezu der Höhe, also der maximale radialen Erstreckung der Hydraulikmediumkammer ist, vorgeschlagen. Hierdurch kann bei einer den Hydraulikdruck übersteigenden lokalen Belastung eine allzugroße, möglicherweise zerstörerische Deformation vermieden werden, weil in diesem Fall die Unterseite der Wellen auf dem Boden der Kammer aufsetzen und so die Kraft in die tieferliegende Struktur des Schaftes ableiten.

Eine höhere Robustheit kann auch erreicht werden, wenn die Hydraulikkammern umfänglich oder auch in axialer Richtung in mehrere, rotationssymmetrische bzw. gleichförmige Unterkammern zu unterteilen. Die zwischen den Kammern befindlichen Trennwände helfen bei der Ableitung lokaler oder auch flächiger Kräfte von der Oberfläche des Spannabschnitts in die tiefere Struktur und erhöhen hierdurch die Widerstandsfähigkeit wesentlich.

In einer Ausgestaltung vorliegender Erfindung sind zur zusätzlichen Druckerzeugung, und/oder Übertragung radial verschieblich gelagerte Spannkörper vorhanden. Diese sind und brauchen nur in begrenztem Umfang radial verschiebbar zu sein, ein Bewegungsspielraum von einigen Promille bis einigen Prozent des Schaftaußenradius ist in der Regel ausreichend. Dieser Spielraum bemisst sich zwischen einem unteren Anschlag bis zu einem oberen Anschlag. Er sollte aber bevorzugt so groß bemessen sein, dass eine Dehnung des Rundwerkzeugs durch die schnelle Rotation beim Abrichten und die damit einhergehende Vergrößerung des Radius der Klemmöffnung des Werkzeugs ausgeglichen werden kann. Der benötigte radiale Bewegungsspielraum hängt somit von der Dehnbarkeit also dem Elastizitätsmodul des abzurichtenden Rundwerkzeugs ab.

Die Spannkörper können als, insbesondere spiegelsymmetrische, Zylinderringsegmente ausgebildet sein oder sich zumindest in der Form nahe an solche anlehnen.

Sie können radial unterhalb der Hydraulikkammer angeordnet sein. Dies bietet den Vorteil, dass eine durch die radiale Bewegung der Spannkörper ausgeübte Radialkraft durch das Hydraulikmedium gleichmäßig flächig verteilt wird. Dies ist insbesondere hilfreich bzw. notwendig, wenn die Spannkörper nicht den vollen Umfang des Schaftes bzw. Spannabschnitts abdecken, sondern zwischen ihnen axial-radial ausgerichtete Trennwände mit mehr oder weniger großem Winkeldurchmesser vorhanden sind. Solche Unterteilungen können der höheren Resilienz des Schaftes gegenüber den Biegemomenten dienen, welche durch die beim Abrichten auf das rotierende auf dem Dorn aufgespannte Rundwerkzeug einseitigen radialen und/oder axialen Kräfte verursacht werden kann (nämlich dann, wenn diese Kräfte unsymmetrisch aufgebracht werden).

Es sind aber auch Ausführungen denkbar, bei denen auf Trennwände bzw. umfängliche Unterteilungen zwischen einzelnen oder allen Spannkörpern verzichtet wird. Bei diesen muss zwar eine stärkere Verbiegung unter den beschriebenen Kräften in Kauf genommen werden, jedoch ist die gleichmäßige Verteilung von durch die Spannkörper ausgeübten radialen Kräften verbessert. Solche radialen Kräfte durch die Spannkörper können in zwei Arten unterteilt werden: statische und dynamische Kräfte. Statische Kräfte lassen sich dadurch erzeugen, dass auf die Spannkörper wiederum eine radial nach außen weisende Kraft entweder mit mechanischen oder wiederum hydraulischen Mitteln ausgeübte wird. Dynamische Kräfte üben die Spannkörper bei Rotation des Abrichtdorns aufgrund ihrer Zentrifugalkräfte auf. Diese sind proportional zum Quadrat der Rotationsfrequenz und proportional zum Radius sowie zur Masse der Spannkörper. Der dynamische Anteil der auf die Fläche bezogenen Spann- oder Klemmkraft, der durch die Spannkörper maximal ausgeübt werden kann, ergibt sich aus dem Produkt des Quadrats der Rotationswinkelfrequenz, dem mittleren Radius des Spannkörpers (also der mittleren Entfernung zur Rotationsachse) und der Flächendichte des Spannkörpers. Letztere ergibt sich wiederum aus der räumlichen Dichte multipliziert mit der radialen Erstreckung des Spannkörpers.

Vorliegende Erfindung schlägt Ausgestaltungen vor, in denen der dynamische Spannkraftanteil maximiert wird indem Spannkörper möglichst hoher räumlicher Dichte (etwa aus Blei) und radialer Erstreckung verwendet werden. Hierdurch kann die durch das Vorspannelement auszuübende anfängliche Einspannkraft vermindert und dennoch beim Abrichtvorgang, bei dem sich der Dorn in einer schnellen Rotation von üblicherweise mehrere tausend bis zehntausend Umdrehungen pro Minute befindet, ein sicherer und verschiebefester Halt garantiert werden. Bei einer radialen Erstreckung von 1 cm, einer räumlichen Dichte von 11 Gramm pro Kubikzentimeter und einem mittleren Radius von 1,5 cm ergibt sich ein Spanndruck von etwa 6500 Hektopascal oder 6,5 bar bei 6000 U/min, 26 bar bei 12.000 U/min und 104 bar bei 24.000 U/min.

Dieser Spanndruck kann noch weiter gesteigert werden, wenn der mittlere Radius, also die mittlere Entfernung der Spannkörper von der Rotationsachse erhöht wird. Dies könnte unter Beibehaltung der Positionierung der Spannkörper unterhalb der Hydraulikmediumkammer durch schlichte Vergrößerung der allgemeinen Schaftdimensionen erfolgen. Dem sind jedoch durch die vorgegebene Größe der Durchgriffsöffnung der abzurichtenden Rundwerkzeuge Grenzen gesetzt, deren Durchmesser üblicherweise zwischen etwa 50 bis 70 mm beträgt. Ebenso findet zwar auch im Hydraulikmedium durch die Rotation eine dynamische Druckerhöhung statt, diese ist aber aufgrund der geringen Dichte von bekannten Hydraulikflüssigkeiten - etwa eine Größenordnung niedriger als die der Spannkörper - in der Regel vernachlässigbar. Alternativ oder zusätzlich schlägt vorliegende Erfindung daher vor, die Spannkörper in radialer Richtung oberhalb der Hydraulikkammer anzuordnen. Dabei können die Spannkörper entweder derart radial verschieblich gehalten sein, dass beim Einspannen eines Rundwerkzeugs die Oberseite der Spannkörper über die umgebende Schaftoberfläche ragt, also nur diese Spannkörperoberseite(n) die Spannfläche des Spannabschnitts bilden. Dies hätte jedoch den Nachteil, dass die Spannkraft nicht gleichmäßig auf das Rundwerkzeug einwirkt, jedenfalls dann, wenn zwischen den Spannkörpern Trennwände zur bereits angesprochenen umfänglichen Unterteilung vorhanden sind. Dieser Nachteil kann entweder durch den Verzicht auf Trennwände oder durch vorsehen einer die Spannkörper überdeckenden elastischen Schicht gelöst werden, wobei die Oberseite dieser Schicht die Spannfläche bildet.

Der Hydraulikdruck in der Hydraulikkammer kann entweder direkt auf die Spannkörper übertragen werden, indem die Unterseite der Spannkörper die Decke der Hydraulikkammer bilden. In diesem Fall ist die Druckdichtheit zwischen Kammer und dem Bewegungsraum der Spannkörper durch eine geeignete umlaufende Dichtung sicherzustellen, welche jedoch in jedem Fall eine radiale Reibungskraft auf die Spannkörper ausüben wird. Die von den Spannkörpern übertragen Spannkraft wäre um diese Reibungskraft vermindert. Erfindungsgemäße Abrichtdorne können in anderen Ausführungen auch eine durchgängige, die Abdichtung sicherstellende Materialschicht zwischen Hydraulikmediumkammer und Spannkörper vorsehen. Damit diese den Druck Hydraulikmediums möglichst weitgehend auf den Spannkörper überträgt, sollte diese Schicht so dünn und damit elastisch wie möglich ausgeführt sein.

Ein wesentlicher Vorteil der Nutzung dieses dynamischen Klemmeffekts zusätzlich zu einer statischen (Vor-)Spannung liegt also darin, dass die Spannkraft sich quadratische mit der Drehzahl erhöht und somit das Werkzeug umso fester auf dem Dorn eingespannt ist, je höher die Drehzahl bei der Bearbeitung ist. Somit kann die Vorspannung grundsätzlich auf ein zur exakten Positionierung nötiges Mindestmaß reduziert und die Differenz zu der beim Abrichten für eine sichere Befestigung nötigen Spannkraft mittels der dynamischen Klemmspannung bereitgestellt werden.

Eine einfache aber dennoch sehr effektive Realisierung eines Vorspannelements für den erfindungsgemäßen Abrichtdorn ist eine Spannschraube, welche in eine Bohrung eingeschraubt ist die in fluider Kommunikation mit der Hydraulikkammer steht. Die Bohrung kann seitlich, d.h. im Bund des Schaftes eingebracht und radial oder zumindest im Wesentlichen radial verlaufen oder auch an einer anderen Stelle, beispielsweise einer Stirnseite des Schaftes oder einer anderen zugänglichen Stelle eingebracht sein. Ein-oder Ausschrauben der Spannschraube bewirkt hierbei eine Verkleinerung oder Vergrößerung des dem Hydraulikmedium zur Verfügung stehenden Volumens, wodurch der Druck des Mediums einstellbar ist. Bei einer Druckerhöhung wird der Spannabschnitt radial nach außen gewölbt und/oder die auf ein aufgespanntes Rundwerkzeug ausgeübte Klemmkraft erhöht. Bei einer Druckverminderung wird umgekehrt eine Wölbung des Spannabschnitts durch dessen Elastizität rückgängig gemacht oder vermindert und/oder die auf ein Rundwerkzeug ausgeübte Klemmkraft reduziert.

Zwecks exakter axialer Positionierung kann der Schaft bei manchen Ausführungsformen des erfindungsgemäßen Abrichtdorns eine Anlageschulter aufweisen. Ein abzurichtendes Werkzeug wird beim Aufsetzen soweit aufgeschoben, bis es mit zumindest einem Teil einer seiner Stirnseiten flächig an der Anlageschulter anliegt. Seine axiale Position ist somit festgelegt und zumindest gegen in einer axialen Orientierung wirkende Kräfte auch gesichert.

Soll das Rundwerkzeug vollständig axial fixiert werden, schlägt vorliegende Erfindung vor eine Fixierscheibe vorzusehen, welche nach dem Rundwerkzeug auf den Schaft des erfindungsgemäßen Abrichtdorns aufgesetzt und dort in geeignet fixiert wird. Eine Möglichkeit wäre Sicherung mittels eines Splints. Dies ist jedoch aufgrund der hohen Drehzahlen im Einsatz schwierig. Eine andere Möglichkeit ist, die, notwendig vorhandene, Öffnung der Fixierscheibe mit einem Innengewinde und den Schaft zumindest in einem vorderen, vom Werkzeug aus gesehen auf der anderen Seite der Anlageschulter aus befindlichen Bereich mit einem dazu passenden Außengewinde zu versehen. Die Fixierscheibe könnte dadurch einfach aufgeschraubt werden. Der Nachteil ist hierbei jedoch, dass der Abrichtdorn ohne weitere Sicherungsmaßnahmen nur noch ein eine Drehrichtung sicher betrieben werden kann, nämlich gegenläufig zur Windungsrichtung der Gewinde.

Wird eine Anlageschulter und ein Fixiermittel in Form einer Fixierscheibe verwendet, schlägt vorliegende Erfindung weiterhin vor, alternativ oder zusätzlich zu einem weiteren Spannelement, die axiale Fixierung mit einer radialen Vorspannung zu verbinden. Hierzu bieten sich zumindest zwei Möglichkeiten.

Einmal kann der Querschnitt des Schaftes im Bereich des gewindetragenden Abschnitts von der Kreisform abweichen, indem etwa eine elliptische oder ovale Form gewählt wird, oder umfänglich eine oder mehrere Verdickungen vorgesehen sind. Die Hydraulikmediumkammer wird dann so gestaltet, dass sie sich zumindest in den Bereichen des gewindetragenden Abschnitts, in denen der Halbmesser durch die Formgebung über das Mittel erhöht ist, bis in diesen Bereich hinein und somit unterhalb dieser Erhöhungen erstreckt. Dabei sollten diese Ausläufer der Kammer möglichst dicht, ohne jedoch die Stabilität und Dichtheit zu gefährden, unter die Oberfläche des Schaftes reichen. Hierdurch wird die beim Aufschrauben der Fixierscheibe ausgeübte Verformung des gewindetragenden Abschnitts möglichst gut in ein Volumen der bzw. Druckänderung in der Hydraulikmediumkammer umgesetzt.

Es wird in diesem Zusammenhang weiterhin empfohlen zur Erleichterung des präzisen Aufschraubens und um eine schrittweise Druck- und damit Vorspannkrafterhöhung sicherzustellen der mittlere Schaftdurchmesser von dem der Anlageschulter abgewandten Ende des Schaftes ausgehend bis zur Anlageschulter oder bis zum Ende des gewindetragenden Abschnitts zunehmend ausgestaltet sein. Eine mögliche und sinnvolle Umsetzung dieser Idee ist eine lineare Zunahme von einem mittleren Durchmesser einige Promille bis Prozent kleiner als der Durchmesser der, in der Regel bevorzugt kreisförmigen, Öffnung der Fixierscheibe bis auf einen Endwert, der in etwa dem der Fixierscheibenöffnung entspricht.

Eine weitere Möglichkeit der Verbindung von axialer Fixierung mit der (Einstellung der) radialen Vorspannung ist es, in der dem Rundwerkzeug zugewandten Stirnseite der Anlageschulter einen oder mehrere, insbesondere rotationssymmetrisch angeordnete, Kraftüberträgerelemente vorzusehen, welche die durch die Fixierscheibe über Rundwerkzeug auf die Anlageschulter ausgeübte axiale Klemmkraft in die Hydraulikmediumkammer übertragen. Hierzu ist diese Kammer so gestaltet, dass sie zumindest in Ausläufern bis in die Anlageschulter und dicht unter die Druckübertragungselemente reicht.

Als Kraftübertragungselement können Stifte verwendet werden, die in Bohrungen eingesetzt sind, welche bis in die (Ausläufer der) Hydraulikmediumkammer reichen. Solche Stifte müssen gegen Austreten des Hydraulikmediums ausreichend abgedichtet sein. Und die Abdichtung in jedem Fall sicherzustellen, kann auch auf Bohrungen verzichtet und die Kraftübertragungselemente als über die übrige Oberfläche der Anlagenschulterstirnseite ragende Stifte auszuformen.

Weitere Eigenschaften, Merkmale und Vorteile vorliegender Erfindung ergeben sich aus der im Folgenden anhand der Figuren näher erläuterten Ausführungsbeispielen. Diese sollen die Erfindung nur illustrieren und in keiner Weise einschränken.

Es zeigen:
- Figur 1:: Eine perspektivische Ansicht einer Ausführungsform einer erfindungsgemäßen Abrichtmaschine mit einem eingesetzten Abrichtdorn
- Figur 2:: Einen Abrichtdorn einer erfindungsgemäßen Abrichtmaschine nach einer ersten bevorzugten Ausführungsform im Längs- und Querschnitt

- Figur 3:: Einen Abrichtdorn einer erfindungsgemäßen Abrichtvorrichtung nach einer zweiten bevorzugten Ausführungsform im Längs- sowie in zwei Querschnitten.
- Figur 4:: Einen Abrichtdorn einer erfindungsgemäßen Abrichtvorrichtung nach einer dritten bevorzugten Ausführungsform im Längs- sowie in zwei Querschnitten

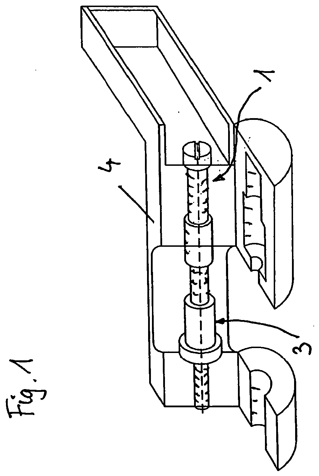

In **Figur 1** ist eine mögliche Ausführungsform einer erfindungsmäßen Abrichtvorrichtung gezeigt. Diese das aus zwei klappbaren Hälften bestehende Gehäuse 4, in welches den Abrichtdorn 1 eingesetzt und, nach dem Zuklappen und sichern der Gehäusehälften an beidseitig des Schaftes 10 angeordneten Lagern 11 und 12 gehalten und fixiert ist. Auf den Abrichtdorn 1 aufgespannt ist ein Rundwerkzeug in Form einer profilierten Schleifscheibe 3 dargestellt. Zum Schnellen Wechseln des Werkzeugs sind die Halbschalen an ihrer Unterkante gelenkig und an ihrer Oberkante mittels eines werkzeuglos betätigbaren Verriegelungsmechanismus verbunden.

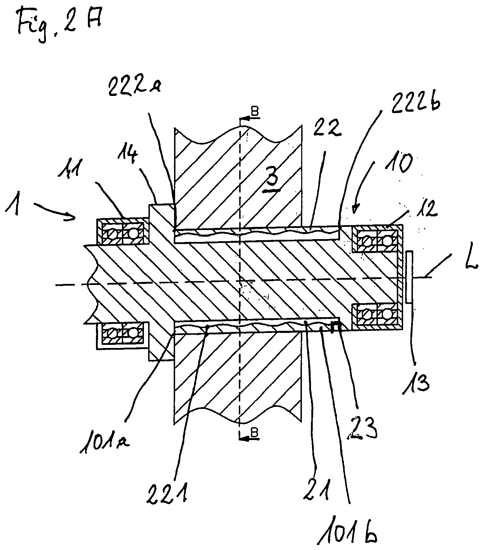

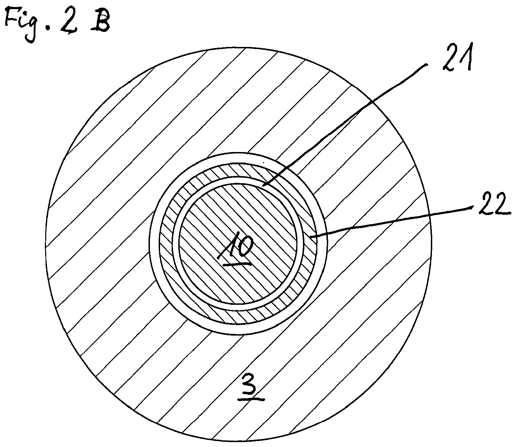

**Figur 2** zeigt den Abrichtdorn einer erfindungsgemäßen Abrichtmaschine gemäß einer bevorzugten Ausführungsform.

Teilfigur A zeigt einen Längsschnitt in einer die Rotationsachse L enthaltenden Ebene, während in Teilfigur B ein Querschnitt entlang der Linie BB dargestellt ist.

Der Abrichtdorn 1 umfasst Schaft 10 mit der der axialen Positionierung dienenden Anlageschulter 14 sowie zwei beidseitig des Schaftes 10 angeordneten Lagern, einem ersten Lager 11 und einem zweiten Lager 12, welche der Fixierung des Schaftes in einem Gehäuse der erfindungsgemäßen Abrichtmaschine dienen, beispielsweise entsprechend dem in Figur 1 gezeigten. Die Lager 11, 12 sind hier als Wälzlager dargestellt, jedoch können andere Lagertypen, beispielsweise (Luft)Gleit- oder Magnetlager ebenfalls im Rahmen vorliegender Erfindung eingesetzt werden. An der Stirnseite der äußeren Lagerhülse des zweiten Lagers 12 ist Sensor 13 positioniert, der insbesondere ein akustischer Sensor sein kann und in bekannter Weise der Überwachung und Ermittlung des (Arbeits)zustandes und der korrekten Funktion der Maschine dient.

Der Schaft 10 von Abrichtdorn 1 umfasst wiederum die Spannvorrichtung 2 bestehend aus dem elastischen Spannabschnitt 22, radial darunterliegender mit einem unter Druck stehendem Hydraulikmedium gefüllten (Hydraulikmedium-)Kammer 21 und dem Vorspannelement 23 zur Einstellung des Hydraulikkammerdruckes. Die Außen- und Spannfläche von Spannabschnitt 22 hat die Form einer Zylinderfläche, während die Innenfläche die im Längsschnitt (Teilfigur A) zu erkennenden Stützstrukturen 221 aufweist. Letztere dienen der Erhöhung der Stabilität des Spannabschnitts 22 gegen die Einwirkung radial gerichteter Kräfte, welche den Hydraulikkammerdruck lokal oder auch über eine größeren Bereich übersteigen, wodurch eine Beschädigung der Spannvorrichtung 2 drohen kann. Der Spannabschnitt 22 ist an beiden Enden nach innen gekröpft, wobei die zylinderförmigen Federn 222a und 222b in entsprechende komplementäre Nuten oder Kerben 101a und 101b des Schaftes 10 eingesetzt sind. Hierdurch wird der Spannabschnitt 22 sicher und fest im Schaft gehalten. Weiterhin ist hierdurch auch die Dichtheit der Verbindung Schaft-Spannabschnitt gegen ein Austreten des unter hohem Druck stehenden Hydraulikmediums sichergestellt.

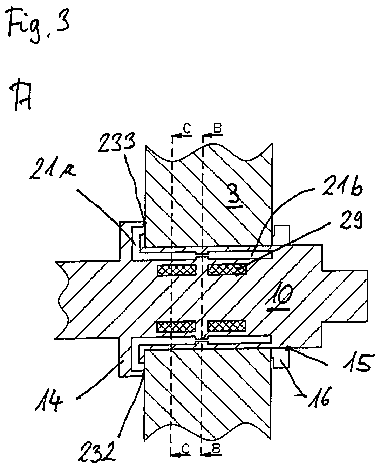

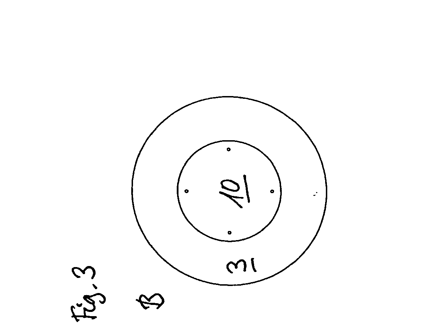

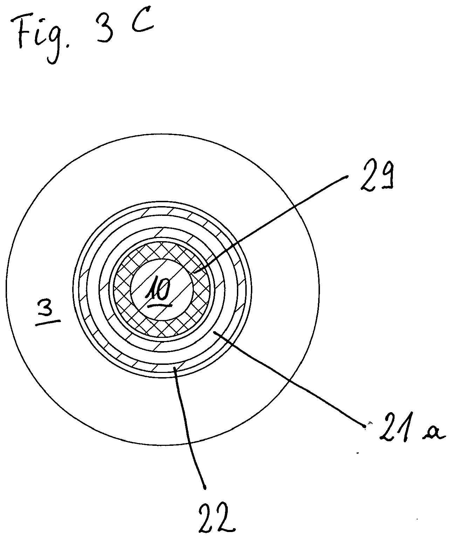

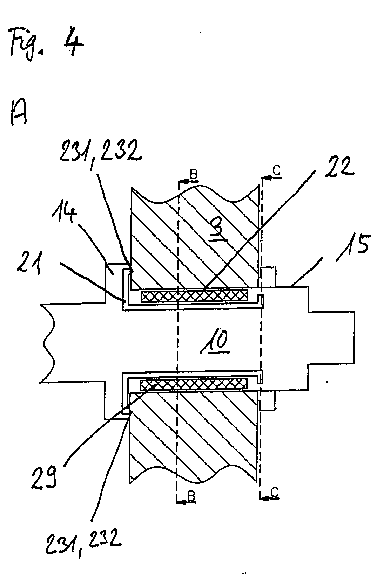

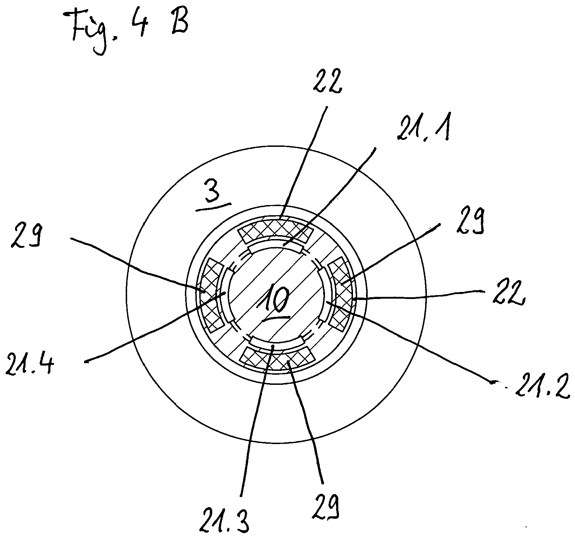

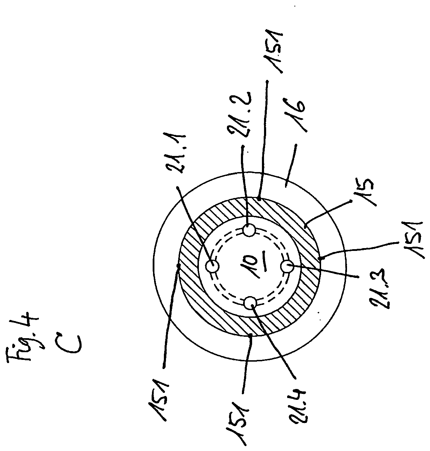

Das Vorspannelement 23 zur Einstellung des statischen Hydraulickammerdrucks besteht aus einer Schraube 233 welche als Verdränger in eine radiale Bohrung in der Seite des Schaftes 10 eingesetzt ist. Die Bohrung führt in die sich zumindest an dieser Stelle über den Spannabschnitt hinaus erstreckende Hydraulikkammer oder in einen Ausläufer der Kammer. Weiteres Ein- bzw. wieder Herausschrauben von Schraube 233 verändert das effektive Volumen der Hydraulikkammer und damit auch den Druck des darin befindlichen Mediums. So kann die gewünschte (statische) Vorspannung wie gewünscht eingestellt werden: soll ein Rundwerkzeug aufgesetzt bzw. abgenommen werden, wird die Schraube 233 soweit herausgedreht, dass der Außendurchmesser des Spannabschnitts 22 kleiner als die Öffnung des Werkzeugs ist bzw. keine nennenswerte Spannung auf das Werkzeug ausgeübt wird. Das Werkzeug kann nun aufgesetzt bzw. abgezogen werden. Im Gegensatz zu den nach dem Stand der Technik angewandten thermischen Aufschrumpfen bzw. Expandieren, welche viele Stunden benötigen und mit einem hohen Beschädigungsrisiko für sowohl das Werkzeug als auch den Abrichtdorn verbunden sind, dauert der Vorgang bei dem erfindungsgemäßen Dorn nur einige bis höchstens einige zehn Sekunden. Dies ist ein Zeitgewinn der in der Praxis kaum überbewertet werden kann. Der Nachteil, mit welchem er erkauft wird, ist die Baubedingt höhere Elastizität des Abrichtdorns: der dünnwandige und entsprechend elastische Spannabschnitt und das Hydraulikmedium weisen grundsätzlich eine höhere Elastizität auf als ein massiver Schaft. Dies äußert sich durch erhöhte Vibrationen und einen verminderten Rund- und Planlauf unter ungleichmäßig angreifenden Kräften. Die in der Ausführungsform nach Figur 2 an der Innenseite des Spannabschnitts vorhandenen Stützstrukturen 221 können dies nur insoweit ausgleichen, als die Amplitude der Vibrationen größer als der Abstand der Strukturen vom Boden der Hydraulikkammer 21 ist. Eine operative Möglichkeit diese Vibrationen zu verringern ist, beim Abrichten des Rundwerkzeugs darauf zu achten, dass möglichst nur gleichmäßige, also sich gegenseitig kompensierende Kräfte auf das Werkzeug und damit den Abrichtdorn ausgeübt werden. Ist jedoch eine konstruktiv erhöhte Stabilität, also verringerte Elastizität gewünscht, wird von vorliegender Erfindung eine umfängliche und/oder axiale Unterteilung vorgeschlagen, wie sie in den Ausführungsformen nach Figur 3 oder 4 gezeigt sind.

In **Figur 3** ist ein Abrichtdorn mit Spannkörpern einer erfindungsgemäßen Abrichtmaschine nach einer weiteren bevorzugten Ausführungsform gezeigt.

Teilfigur A zeigt einen Längsschnitt, während in Teilfiguren B und C je ein Querschnitt entlang der Linien BB bzw. CC aus Teilfigur A dargestellt sind.

Der Abrichtdorn 1 umfasst einen Schaft 10 der wiederum an einem Ende einen Bereich 15 mit einem Außengewinde zum Aufschrauben einer axialen Fixierscheibe 16 und an einem gegenüberliegenden Ende eine Anlageschulter 14 sowie dazwischenliegend einen Spannbereich mit einer Spannvorrichtung 2 umfasst. Ebenso umfasst der Abrichtdorn, hier nicht dargestellt, zumindest ein Lager, bevorzugt zwei beidseitig des Schaftes 10 angeordnete Lager sowie einen Sensor, wie in Figur 2 gezeigt. Auf den Schaft 10 bzw. Die Spannvorrichtung 2 ist ein Rundwerkzeug in Form einer Schleifscheibe 3 aufgesetzt.

Spannvorrichtung 2 umfasst Hydraulikmediumkammer, welche in eine obere Kammer 21a und eine untere Kammer 21b unterteilt ist, welche beide unterhalb des dünnwandigen Spannabschnitts 22 gelegen sind, wobei Spannabschnitt 22 wiederum beidseitig integral mit dem Rest des Schaftes 10 verbunden ist. Hierdurch ist zum einen die Kraftübertragung in den Schaft und zum anderen die Dichtheit gegen Austreten des unter Druck stehenden Hydraulikmediums gegenüber der Ausführungsform aus Figur 2 verbessert. In einem Hohlräumen radial unterhalb der oberen und unteren Hydraulikkammern 21a, 21b, der von dieser durch eine dünne, elastische Materialschicht mit einer der des Spannabschnitts 22 vergleichbaren Stärke sind radial verschiebbare Spannkörper 29 vorhanden. Diese weisen eine möglichst hohe räumliche Dichte und radiale Erstreckung auf, um eine hohe Flächendichte zu erreichen. Hierdurch wird durch die auf die Spannkörper bei Rotation des Abrichtdorns wirkenden Zentrifugalkräfte der Druck des Hydraulikmediums dynamisch erhöht und dadurch der von der Spannvorrichtung 2 statisch auf das Werkzeug 3 ausgeübte Spannkraft verstärkt. Der radialen Erstreckung der Spannkörper 29 sind aufgrund der nötigen Stabilität des Schaftes 10 allerdings Grenzen gesetzt.

In der Ausführungsform nach Figur 3 ist eine zweiteilige Hydraulickammer eingesetzt, bei der, wie in Teilfigur B zu erkennen, eine obere, der Anlageschulter 14 zugewandte (Unter-)Kammer 21a und eine untere Kammer 21b durch eine bis auf einige Durchlässe zum Druckausgleich massive Trennwand voneinander separiert sind. Die Trennwand erhöht die Stabilität des Schafts 10 und damit des Abrichtdorns gegen angreifende äußere Kräfte. Zusätzlich zur axialen Unterteilung könnte auch eine umfängliche Unterteilung in Unterkammern, so wie in Figur 4 dargestellt vorgesehen sein um die Verwindungs- und Biegesteifigkeit des Schaftes noch weiter zu erhöhen.

Der Schaft 10 weist eine Anlageschulter 14, auf welche mit der auf den Gewindeabschnitt 15 des Schaftes aufschraubbaren Fixierscheibe 16 zusammenwirkt, um das Werkzeug 3 in axialer Richtung zu positionieren und fixieren. Das der Einstellung des Hydraulikmediumdruckes dienende Vorspannelement 23 ist in dieser Ausführung dadurch realisiert, dass diametral gegenüberliegende Kraftübertragungselemente in Form der Vorsprünge 233 in der dem Werkzeug zugewandten Stirnseite der Anlageschulter vorhanden sind und sich die Hydraulikkammer zumindest in Ausläufern bis dicht unterhalb dieser Vorsprünge erstreckt, so dass der die Vorsprünge tragende Bereich der Anlageschulter unter einwirken einer axialen Kraft flexibel nachgibt und dadurch das effektive Volumen der Hydraulikkammer verringert. Wird ein Rundwerkzeug aufgesteckt und mittels Aufschrauben der Fixierscheibe axial fixiert, so überträgt sich die mittels der Fixierscheibe ausgeübte axiale Kraft über das Rundwerkzeug auf die Vorsprünge, welche elastisch nachgeben und somit das Volumen der Hydraulikkammer reduzieren, wodurch sich der statische Druck des Hydraulikmediums erhöht. Zusätzlich oder alternativ zu dieser Art der Vorspannungserzeugung könnte aber auch ein weiteres Vorspannelement, wie die in Figur 2 gezeigte Spannschraube eingesetzt werden.

**Figur 4** zeigt einen Abrichtdorn einer erfindungsgemäßen Abrichtmaschine gemäß einer dritten bevorzugten Ausführungsform mit Spannkörpern radial oberhalb der Hydraulikkammer.

Wiederum zeigt Teilfigur A einen Längsschnitt während in Teilfiguren B bzw. C je ein Querschnitt entlang der Linie BB bzw. CC aus Teilfigur A dargestellt sind.

In Teilfigur A als auch in Teilfigur B ist zu sehen, dass in dieser erfindungsgemäßen Ausführungsform die Spannkörper 29, insgesamt 4 an der Zahl, oberhalb der Hydraulikkammer angeordnet sind. Dies dient dazu, den Abstand der Spannkörper von der Rotationsachse des Abrichtdorns zu vergrößern und dadurch den oben beschriebenen dynamischen Spanneffekt zu verstärken. Der oberhalb der Spannkörper gelegene Spannabschnitt 22, dessen Außenfläche die Spannfläche darstellt, ist zum Erreichen einer hohen Elastizität möglichst dünn ausgeführt. Dies ist möglich, da auf den Schaft einwirkende Biegekräfte durch die zwischen den Spannkörpern gelegenen Trennabschnitte sowie durch die Spannkörper selber aufgenommen und abgeleitet werden können. Dies ist möglich, da die Spannkörper 29 im Vergleich zu den mit Hydraulikmedium gefüllten Kammern, welche in den anderen vorgestellten Ausführungsformen nach Figur 2 und 3 den Platz einnehmen, den hier die Spannkörper 29 innehaben, ein deutlich höhere Elastizitätsmodul haben und als feste Körper formstabil sind. Die Spannkörper 29 haben in dieser Ausführung einen kreisringsegmentförmigen Querschnitt und verfügen über einen gewissen radialen Bewegungsspielraum um eine deutliche Wölbung des Spannabschnitts 22 bewirken zu können. Um ein axial und tangential möglichst spielfreie Führung der Spannkörper zu erreichen und dennoch eine Leichtgängigkeit ihrer Radialbewegung sicherzustellen, kann ein Gleitmittel in die die Spannkörper 29 beherbergenden Hohlräume eingebracht werden. Alternativ könnte auch eine Wälzlagerung eingesetzt werden.

Die Hydraulikkammer ist in vier umfängliche, rotationssymmetrische Unterkammern 21.1 bis 21.4 unterteilt, die zwecks Druckausgleichst über Kanäle in fluider Kommunikation stehen und von denen jede einem der vier Spannkörper zugeordnet, nämlich direkt unterhalb angeordnet ist (siehe Teilfigur B). Der Kammerquerschnitt kann wie der der Spannkörper 29 einem Kreisringsegment entsprechen oder auch anders ausgestaltet sein, mit der einzigen Maßgabe, dass die die Kammer und den Spannkörperhohlraume separierende Trenndecke ausreichend dünn und elastisch ist um bei Druckänderung in der Hydraulikmediumkammer eine entsprechende Verformung und damit radiale Verschiebung der Spannkörper zu erreichen. Zusätzlich könnte zur Erhöhung der Widerstandskraft eine axiale Unterteilung der Kammern wie bei der Ausführungsform nach Figur 3 vorgesehen sein.

Teilfigur C zeigt einen Querschnitt durch den Schaft 10 im Bereich des Gewindeabschnitts 15, in dem sich die Fixierscheibe 16 befindet, welche im Zusammenspiel mit der Anlageschulter das Werkzeug 3 in axialer Richtung positioniert und fixiert. Wie dargestellt, weicht der Querschnitt des Schaftes hier signifikant von einer Kreisform ab: oberhalb jeder der Hydraulik(unter)kammern 21.1 - 21.4 befindet sich je eine Aufwölbung 151. Diese ist so bemessen, dass der Halbmesser des Schaftes an der höchsten Stelle der Aufwölbung ein wenig größer ist als der lichte Halbmesser der Öffnung der Fixierscheibe 16. Da die Kammern dort ähnlich wie im Spannabschnitt bis nahe unter die Oberfläche des Schaftes reicht, hat der Schaft in diesen Aufwölbungen 151 eine gewisse Elastizität. Beim Aufschrauben der Scheibe werden die Aufwölbungen nach innen gedrückt und so das Volumen der Hydraulikkammer verkleinert und dabei der Druck des darin befindlichen Mediums entsprechend erhöht. Um eine graduelle Zunahme des Drucks beim Aufschrauben der Scheibe zu erreichen, ist der gewindetragende Bereich 15 des Schaftes 10 so ausgebildete, dass sein Halbmesser von dem der Anlageschulter abgewandten Ende aus stetig zunimmt. Die Variation muss der Nachgiebigkeit der Aufwölbungen angepasst werden, wird jedoch einige Prozent in der Regel nicht überschreiten. Obwohl dies zum Einstellen der Vorspannung Grundsätzlich ausreichen könnte, sind als zusätzliches Elemente zur Erzeugung oder Erhöhung der statischen Vorspannung ähnlich wie in Figur 3 gezeigt Kraftübertragungselemente in der dem Werkzeug 3 zugewandten Stirnseite der Anlageschulter 14 vorhanden. Anders als dort bestehen sie hier jedoch aus in bis in die Hydraulikkammern 21.1 bis 21.4 reichende Bohrungen 231, in welche radial verschiebbare Stifte 232 eingesetzt sind.

Da die oben beschriebene Geometrie des gewindetragenden Abschnitts 15 eine feste Beziehung zwischen der Anzahl der aufgeschraubten Umdrehungen der Fixierscheibe und der (radiale) Vorspannung bewirkt, könnte es sein, dass für dünne Werkzeuge eine maximale Vorspannung erreicht wird bevor es axial ausreichend fixiert ist. Um dies auszugleichen könnte ein, hier nicht dargestelltes, drittes Element zur Einstellung des statischen Hydraulikmediumdruckes und damit der Vorspannung vorgesehen sein, etwa eine Spannschraube wie bei der Ausführungsform in Figur 2.

### Bezugszeichenliste

- 1: Abrichtdorn
- 10: Schaft
- 11: erstes Lager
- 12: zweites Lager
- 14: Anlageschulter
- 15: Gewindeabschnitt
- 151: Ausbuchtung
- 16: Fixierscheibe

- 2: Spannvorrichtung
- 21: Hydraulikmediumkammer
- 21.1-4: umfängliche Unterkammern
- 21a, 21b: unter, obere Unterkammern
- 22: Spannabschnitt

- 23: Spannelement
- 231: Bohrung zur Aufnahme von 232
- 232: Stift
- 233: Vorsprung
- 29: Spannkörper
- 292: Außenfläche

- 3: Werkzeug, Schleifscheibe
- 4: Gehäuse

- L: Längs- und Rotationsachse des Abrichtdorns

## Patentansprüche

1. Abrichtdorn (1) mit einem der Montage eines eine durchgehende konzentrische Öffnung aufweisenden Rundwerkzeugs, insbesondere einer Schleifscheibe (3), dienenden Schaft (10) und einem an dem Gehäuse (4) einer Abrichtvorrichtung fixierbaren, in einem ersten Endbereich des Abrichtdorns (1) befindlichen ersten Lager (11),
wobei der Schaft (10) eine hydraulische Spannvorrichtung (2) aufweist, mittels der die konzentrische Öffnung eines Rundwerkzeugs durchgreifbar ist und die eine Kammer (21) mit einem Hydraulikmedium umfasst, welches durch ein Vorspannelement (23) mit einem Vorspanndruck beaufschlagbar ist, und
wobei die hydraulische Spannvorrichtung (2) aus einem in radialer Richtung oberhalb der Kammer (21) gelegenen Spannabschnitt (22) gebildet ist, dessen Außenfläche die Spannfläche bildet und der sich bei Erhöhung des hydraulischen Drucks in der Kammer (21) elastisch in radialer Richtung nach außen wölbt, sodass auf die Innenfläche der vom Spannabschnitt (22) durchgriffenen konzentrischen Öffnung des Rundwerkzeugs eine radiale Spannkraft ausübbar ist,
**dadurch gekennzeichnet, dass**
der Spannabschnitt (22) beidseitig, also sowohl mit einer dem ersten Lager (11) zugewandten, als auch einer vom ersten Lager (11) abgewandten Seite, im Schaft (10) gehalten ist

2. Abrichtdorn nach Anspruch 1, **dadurch gekennzeichnet, dass** der Spannabschnitt (22) an beiden Enden nach innen gekröpft ist und zylinderförmige Federn (222a, 222b) aufweist, welche in entsprechende komplementäre Nuten (101a, 101b) des Schaftes (10) eingesetzt sind.

3. Abrichtdorn nach Anspruch 1, **dadurch gekennzeichnet, dass** der Spannabschnitt (22) zumindest teilweise als eine ausreichend dünne, mit dem Schaft (10) integrale, hohlzylindrische Materialdecke ausgebildet ist.

4. Abrichtdorn nach Anspruch 1 oder 2, **dadurch gekennzeichnet, dass** die Kammer (21) umfänglich in mehrere, insbesondere kongruente und bezüglich einer Längsachse (L) des Schaftes (10) rotationssymmetrisch angeordnete Unterkammern (21.1-4) unterteilt ist.

5. Abrichtdorn nach einem der Ansprüche 1 - 4, **dadurch gekennzeichnet, dass** entlang des Schaftes (10) mehrere Kammern (21a, 21b) vorhanden sind.

6. Abrichtdorn nach einem der Ansprüche 1 - 5, **gekennzeichnet durch** ein zweites Lager (12) des Abrichtdorns (1), welches sich insbesondere auf der dem ersten Lager (11) gegenüberliegenden Seite der Spannvorrichtung (20) befindet.

7. Abrichtdorn nach einem der Ansprüche 1 bis 6, **dadurch gekennzeichnet, dass** der Spannabschnitt (22) zwei oder mehr Spannkörper (29) umfasst, welche in radialer Richtung bis zu einem Anschlag verschiebbar gehalten sind.

8. Abrichtdorn nach Anspruch 7, **dadurch gekennzeichnet, dass** die Spannkörper (29) in radialer Richtung unterhalb der Kammer (21) angeordnet sind, wobei der Anschlag durch die Unterseite des die Kammer (21) vom Bewegungsraum des/der Spannkörper abtrennenden Bodens (211) gebildet ist oder durch die den Stirnseiten der Spannkörper gegenüberliegenden Seiten des die Spannkörper enthaltenden Raumes gebildet ist und die Außenfläche (292) der Spannkörper in die Hydraulikkammer (21) ragt, so dass die Außenflächen in direktem Kontakt mit dem Hydraulikmedium stehen.

9. Abrichtdorn nach Anspruch 7, **dadurch gekennzeichnet, dass** die Spannkörper (29') in radialer Richtung oberhalb der Kammer (21) angeordnet sind, und gänzlich unterhalb des Spannabschnitts (22) angeordnet sind oder der Spannabschnitt (22) durchbrochen ist so dass zumindest ein Teil der Spannfläche durch die Außenfläche der Spannkörper (29) gebildet ist, wobei in diesem Fall der Anschlag durch mindestens zwei gegenüberliegende Stirnseiten der Spannkörper (29) gebildetes ist, und wobei bei Erreichen des Anschlags die Außenfläche (292) der Spannkörper (29) die umgebende Oberfläche des Schaftes (10) überragt.

10. Abrichtdorn nach einem der vorhergehenden Ansprüchen, **dadurch gekennzeichnet, dass** das Vorspannelement (23) eine Spannschraube ist, welche in eine mit der Kammer (21) in fluider Kommunikation stehende Gewindebohrung (24) des Schaftes eingeschraubt ist.

11. Abrichtdorn nach einem der vorhergehenden Ansprüchen, **gekennzeichnet durch** eine der axialen Positionierung des Rundwerkzeugs dienenden Anlageschulter (14) des Schaftes (10).

12. Abrichtdorn nach dem vorhergehenden Anspruch, **gekennzeichnet durch** eine in Verbindung mit der Anlageschulter (14) der axialen Fixierung des Rundwerkzeugs dienenden, auf ein Gewinde (15) des Schafts (10) aufschraubbare Fixierscheibe (16).

13. Abrichtdorn nach dem vorhergehenden Anspruch, **dadurch gekennzeichnet, dass** das Vorspannelement (23) dadurch gebildet ist, dass
- zumindest der das Gewinde (15) tragende Abschnitt des Schaftes (10) zumindest teilweise entlang seiner axialen Erstreckung von einem kreisförmigen Querschnitt abweicht, insbesondere eine ovale oder elliptische Form aufweist, wobei der Unterschied zwischen einem größtem und einem kleinstem Halbmesser einige Promille bis Prozent beträgt, und ein mittlerer Halbmesser in etwa dem Halbmesser einer ein Innengewinde aufweisenden durchgängigen Öffnung (150) der Fixierscheibe (15) entspricht, und
- die Kammer (21) sich bis unterhalb des das Gewinde (15) tragenden Abschnitts des Schaftes (10) erstreckt.

14. Abrichtdorn nach einem Ansprüche 11 - 13, **dadurch gekennzeichnet, dass** das Vorspannelement (23) dadurch gebildet ist, dass
- in einer dem Rundwerkzeug zugewandten Stirnseite der Anlageschulter (14) mindestens ein Kraftübertragungselement vorhanden ist, und
- die Kammer (21) sich in die Anlageschulter (14) und bis unterhalb des Kraftübertragungselement erstreckt,
- wobei das Kraftübertragungselement ein in eine in die Kammer (21) reichende Bohrung (230) eingesteckter Stift (231) oder ein auf der Oberfläche der Anlageschulter (14) angeformter Vorsprung (232) ist.

15. Abrichtvorrichtung umfassend
• ein Gehäuse (4), und
• einen Abrichtdorn (1) gemäß eines der vorhergehenden Ansprüche, und
• ein Abrichtwerkzeug zum Abrichten eines auf dem Abrichtdorn (1) montierten Rundwerkzeugs.

## Claims

1. Dressing mandrel having a shaft (10), which serves for the mounting of a circular tool with a through-passing concentric opening, in particular a grinding disk (3), and a first bearing (11), which is fixed on the housing (4) of a dressing device and is located in a first end region of the dressing mandrel (1),
wherein the shaft (10) has a hydraulic clamping device (2), which extends through the opening in the circular tool and comprises a chamber (21) with a hydraulic medium, which can be subjected to a preclamping pressure by means of a preclamping element (23), and
wherein the hydraulic clamping device (2) is formed from a clamping section (22), which, in a radial direction, is located above the chamber (21) and of which the outer surface forms the clamping face and which bulges outwardly in a radial direction on an increase of the hydraulic pressure in the chamber (21), such that a radial clamping force is exerted on the inner surface of the concentric opening of the circular tool, through which the clamping section (22) passes, **characterised in that**
the clamping section (22) is held in the shaft at both sides, that is to say with one side facing the first bearing (11) as well as with one side facing away from the first bearing (11).

2. Dressing mandrel according to claim 1, **characterised in that,** the clamping section (22) is inwardly offset at both ends and comprises cylindrical springs (222a, 222b), which are inserted into corresponding complementary grooves (101a, 101b) of the shaft (10).

3. Dressing mandrel according to claim 1, **characterised in that,** the clamping section (22) is at least partly designed as a sufficiently thin, hollow-cylindrical material cover that is integral with the shaft (10).

4. Dressing mandrel according to claim 1 or 2, **characterised in that,** the chamber (21) is circumferentially subdivided into a plurality of in particular congruent subchambers (21.1-4), which are disposed rotationally symmetrically about a longi-tudinal axis (L) of the shaft (10).

5. Dressing mandrel according to any one of claims 1 - 4, **characterised in that,** a plurality of chambers (21a, 21b) are present along the shaft (10).

6. Dressing mandrel according to any one of claims 1 - 5, **characterised by** a second bearing (12) of the dressing mandrel (1), which is disposed in particular on that side of the clamping device (20) that is opposite the first bearing (11).

7. Dressing mandrel according to any one of claims 1 to 6, **characterised in that** the clamping section (22) comprises two or more clamping bodies (29), which are held such that they are displaceable in the radial direction as far as a stop.

8. Dressing mandrel according to claim 7, **characterised in that** the clamping bodies (29) are disposed in the radial direction below the chamber (21), the stop being formed by the underside of the base (211), which separates the underside of the chamber (21) from the movement space of the clamping body / bodies or by those sides, lying opposite the clamping bodies, of the space that contains the clamping bodies and the outer surface (292) of the clamping bodies projects into the hydraulic chamber (21) such that the outer surfaces are in direct contact with the hydraulic medium.

9. Dressing mandrel according to claim 7, **characterised in that** the clamping bodies (29') are disposed in a radial direction above the chamber (21) and are entirely disposed below the clamping section (22) or the clamping section (22) is penetrated such that at least a portion of the clamping face is formed by the outer surface of the clamping bodies (29), the stop being formed by at least two opposing end sides of the clamping bodies (29) and, on reaching the stop, the outer surface (292) of the clamping bodies (29) projects beyond the surrounding surface of the shaft (10).

10. Dressing mandrel according to any one of the preceding claims, **characterised in that** the preclamping element (23) is a clamping screw, which is screwed into a threaded bore (24) of the shaft, which is in fluid communication with the chamber (21).

11. Dressing mandrel according to any one of the preceding claims, **characterised by** an abutment shoulder (14) of the shaft (10), which serves for axial positioning of the circular tool.

12. Dressing mandrel according to the preceding claim, **characterised by** a fixing disk (16), which, in connection with said abutment shoulder (14), serves for axial fixing of the circular tool, and can be screwed onto a screw thread (15) of the shaft (10).

13. Dressing mandrel according to the preceding claim, **characterised in that** the preclamping element (23) is formed by the fact that
- at least that section of the shaft (10) that bears the screw thread (15) deviating at least partially along its axial extension from a circular cross-section, in particular having an oval or elliptical form, the difference between a maximum and a minimum radius being several per mille to per cent, and an average radius corresponding to approximately the radius of an end-to-end opening (150) of the fixing disk (15) having an internal thread, and
- the chamber (21) extending to below that section of the shaft (10) that bears the thread (15).

14. Dressing mandrel according to any one of claims 11 - 13, **characterised in that** the preclamping element (23) is formed by the fact that
- in an end face of the abutment shoulder (14) which faces the circular tool, there is at least one force transmission element, and
- the chamber (21) extends into the abutment shoulder (14) and as far as below the force transmission element,
- wherein the force transmission element is a pin (231), which is inserted into a bore (230) extending into the chamber (21) or a projection (232) integrally formed on the surface of the abutment shoulder (14).

15. Dressing device comprising
• a housing (4), and
• a dressing mandrel (1) according to one of the preceeding claims, and
• a dressing tool for dressing a circular tool which is mounted on the dressing mandrel (1).

## Revendications

1. Mandrin de dressage comportant un arbre (10), qui sert au montage d'un outil circulaire à ouverture concentrique traversante, notamment un disque de meulage (3), et un premier palier (11), qui est fixé sur le boîtier (4) d'un dispositif de dressage et est situé dans une première région d'extrémité du mandrin de dressage (1),
dans lequel l'arbre (10) présente un dispositif de serrage hydraulique (2), qui s'étend à travers l'ouverture dans l'outil circulaire et comprend une chambre (21) avec un milieu hydraulique, qui peut être soumis à une pression de préserrage au moyen d'un élément de préserrage (23), et
dans lequel le dispositif de serrage hydraulique (2) est formé d'une section de serrage (22) qui, dans une direction radiale, est située au-dessus de la chambre (21) et dont la surface extérieure forme la face de serrage et qui est renflée vers l'extérieur dans une direction radiale sur une augmentation de la pression hydraulique dans la chambre (21), de sorte qu'une force de serrage radiale est exercée sur la surface intérieure de l'ouverture concentrique de l'outil circulaire, à travers laquelle passe la section de serrage (22),
**caractérisé en ce que**
le section de serrage (22) est maintenu dans l'arbre des deux côtés, c'est-à-dire avec un côté tourné vers le premier palier (11) ainsi qu'avec un côté tourné à l'opposé du premier palier (11).

2. Mandrin de dressage selon la revendication 1, **characterisé en ce que,** la section de serrage (22) est décalée vers l'interieur aux deux extremité et comportant des ressorts cylindriques (222a, 222b), qui sont insérés dans des rainures (101a, 101b) complémentaires correspondantes de l'arbre (10).

3. Mandrin de dressage selon la revendication 1, **caractérisé en ce que** la section de serrage (22) est au moins en partie conçue comme un couvercle de matériau cylindrique creux suffisamment mince qui est intégrale avec l'arbre (10).

4. Mandrin de dressage selon la revendication 1 ou 2, **caractérisé en ce que,** la chambre (21) est subdivisée circonférentiellement en une pluralité de sous-chambres notamment congruentes (21.1-4), qui sont disposées à symétrie de révolution autour d'un axe longi-tudinal (L ) de l'arbre (10).

5. Mandrin de dressage selon l'une des revendications 1 à 4, **caractérisé en ce qu'une** pluralité de chambres (21a, 21b) sont présentes le long de l'arbre (10).

6. Mandrin de dressage selon l'une des revendications 1 à 5, **caractérisé par** un deuxième palier (12) du mandrin de dressage (1), qui est disposé en particulier du côté du dispositif de serrage (20) opposé au premier palier ( 11).

7. Mandrin de dressage selon l'une des revendications 1 à 6, **caractérisé en ce que** la section de serrage (22) comprend deux ou plusieurs corps de serrage (29), qui sont maintenus de manière à pouvoir se déplacer dans la direction radiale jusqu'à une butée..

8. Mandrin de dressage selon la revendication 7, **caractérisé en ce que** les organes de serrage (29) sont disposés dans la direction radiale en dessous de la chambre (21), la butée étant formée par la face inférieure de l'embase (211), qui sépare la dessous de la chambre (21) depuis l'espace de mouvement du ou des corps de serrage ou par les côtés opposés aux corps de serrage, de l'espace qui contient les corps de serrage et la surface extérieure (292) du ou des corps de serrage saillie dans la chambre hydraulique (21) de sorte que les surfaces extérieures sont en contact direct avec le fluide hydraulique.

9. Mandrin de dressage selon la revendication 7, **caractérisé en ce que** les corps de serrage (29') sont disposés dans une direction radiale au-dessus de la chambre (21) et sont entièrement disposés en dessous de la section de serrage (22), ou de la section de serrage (22 ) est pénétrée de telle sorte qu'au moins une partie de la face de serrage est formée par la surface extérieure des corps de serrage (29), la butée étant formée par au moins deux côtés d'extrémité opposés des corps de serrage (29) et, en atteignant la butée, la surface extérieure (292) des corps de serrage (29) dépasse de la surface environnante de l'arbre (10).

10. Mandrin de dressage selon l'une des revendications précédentes, **caractérisé en ce que** l'élément de préserrage (23) est une vis de serrage, qui est vissée dans un alésage taraudé (24) de l'arbre, lequel est en communication fluidique avec la chambre (21).

11. Mandrin de dressage selon l'une des revendications précédentes, **caractérisé par** un épaulement de butée (14) de l'arbre (10), qui sert au positionnement axial de l'outil circulaire.

12. Mandrin de dressage selon la revendication précédente, **caractérisé par** un disque de fixation (16), qui, en liaison avec ledit épaulement de butée (14), sert à la fixation axiale de l'outil circulaire, et peut être vissé sur un filetage (15) de l'arbre (10).

13. Mandrin de dressage selon la revendication précédente, **caractérisé en ce que** l'élément de préserrage (23) est formé par le fait que
- au moins la section de l'arbre (10) qui porte le filetage (15) s'écartant au moins partiellement le long de son extension axiale d'une section circulaire, en particulier ayant une forme ovale ou elliptique, la différence entre un rayon maximal et un rayon minimal étant de plusieurs pour mille à pour cent, et un rayon moyen correspondant approximativement au rayon d'une ouverture (150) du disque de fixation (15) ayant un filetage intérieur, et
- la chambre (21) s'étendant jusqu'en dessous de la section de l'arbre (10) qui porte le filetage (15).

14. Mandrin de dressage selon l'une des revendications 11 à 13, **caractérisé en ce que** l'élément de préserrage (23) est formé par le fait que
- dans une face d'extrémité de l'épaulement de butée (14) qui fait face à l'outil circulaire, il y a au moins un élément de transmission de force, et
- la chambre (21) s'étend dans l'épaulement de butée (14) et jusqu'en dessous de l'élément de transmission de force,
- dans lequel l'élément de transmission de force est une goupille (231), qui est insérée dans un alésage (230) s'étendant dans la chambre (21) ou une saillie (232) formée intégralement sur la surface de l'épaulement de butée (14).

15. Dispositif de dressage comprenant
• un boîtier (4), et
• un mandrin de dressage (1) selon l'une des revendications précédentes, et
• un outil de dressage pour dresser un outil circulaire qui est monté sur le mandrin de dressage (1).
